# EUROPEAN PATENT APPLICATION

(11) **EP 4 574 699 A1**
(43) Date of publication of application: **25.06.2025**
(21) Application number: 24220019.4
(22) Date of filing: 14.12.2024
(51) Int. Cl.: B65D 43/02, A47G 19/22, A47G 19/23

(54) **REUSABLE LID FOR CUPS FOR BEVERAGES**

(30) Priority: 18.12.2023 GR 20230101046
(71) Applicant: Thrace Plastics Pack SA, 45500 Ioannina (GR)
(72) Inventor: KARASIOTAS, Georgios, 67100 Xanthi (GR)
(74) Representative: Samouilidis, Emmanouil

(57) **Abstract**

A reusable lid for liquid cups with a rim with a central body with a perimeter, and a peripheral body. The central body is connected to the peripheral body along the perimeter of the central body. The peripheral body has a cross-section of a U-form with an outer face having a contour, and two opposite legs, namely an inner leg and an outer leg, and a cavity configured to house the rim of the cup. The cavity has an opening, the outer leg has a free edge, an inner face within the cavity and a bulge on the inner face, adjacent to the free edge of the outer leg.

## Description

The invention refers to reusable lids for cups for beverages.

There are currently lids that may be used with cups having a particular rim. When used with cups having alternative rim designs do not achieve an effective closure. Known lids are made of polystyrene using thermoforming technique.

Such lids should comply with the regulations that regulate the materials used for lids and cups that are intended to come in repeated use with food or drinks. They have relatively high strength requirements. For effective transportation and storage, the lids should also be stackable.

The object of the invention is a lid that is appropriate for repeated use and contact with food and drinks. Another object of the invention is a method of production of such a lid.

The reusable lid for liquid cups of the invention has a rim, with a central body with a perimeter and a peripheral body. The central body is connected to the peripheral body along the perimeter of the central body. The peripheral body has a cross-section of a U-form with an outer face having a contour, and two opposite legs, namely an inner leg and an outer leg, and a cavity configured to house the rim of the cup. The cavity has an opening, the outer leg has a free edge, an inner face within the cavity and a bulge on the inner face, adjacent to the free edge of the outer leg. The inner leg is nearer to the central body rather than the outer leg.

The lid may cooperate with any cup, for example reusable, single use, plastic, paper, paperboard etc. The rim of the lids may have any shape, for example rolled, flat or other.

In some examples the bulge has a contour with two concave curves i.e., the first concave curve and the second concave curve between the first concave curve and the second concave curve. The first concave curve is closer to free edge than the second concave curve.. The first concave curve may be joined directly to the convex curve, i.e. there is no any intermediate portion, and/or the second concave curve may be joined directly to the convex curve.

The peripheral body has a contour and the shape of the first concave curve may correspond to a part of the contour of the outer face of the peripheral body. This facilitates optimum stowage.

The central body has a central wall configured to cover the opening of the cup and a side wall at an angle, optionally at right angle or at about right angle with respect to the central wall.

The central wall has an outlet to allow the flow of the liquid that is in the cup. The user may have direct contact with the outlet or he/she may use a straw through the outlet. The outlet may co-operate with as flap movable between a position to open the outlet and a position to close the outlet, so as to hinder the flow of fluid from the outlet.

In some examples at least one of the inner leg, the outer leg and the side wall is strengthened with webs. One or more rings provided in the side wall facilitate the removal of a lid form a stack of lids, because they create a tolerance between two lids that are one of the top of another.

The rings may extend along the periphery of the inner leg and/or the outer leg and/or the side wall. In some cases, they may lie on one plane, i.e. they are planar.

The webs may be ring-shaped.

In some examples the lid is one single molded piece and any information that appears on its surface is engraved. Some lids have no attached labels.

The method of production and the design of the lid allows to produce a lid with a thickness that is less than 0.38 mm in any position.

The lid may be produced by injection molding, for example hot runner injection molding, injection compression molding. Injection molding permits to produce lids of high strength on one hand and light weight of the other. The production with injection molding allows the production of the complicated geometry with curved lines of the peripheral body.

The application makes reference to "concave and "convex" contours. Concave contour is a contour that is curved inwardly and convex contour is a curve that is curved outwardly

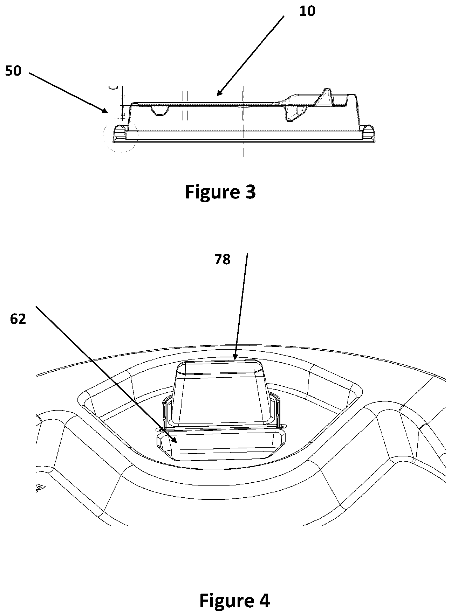

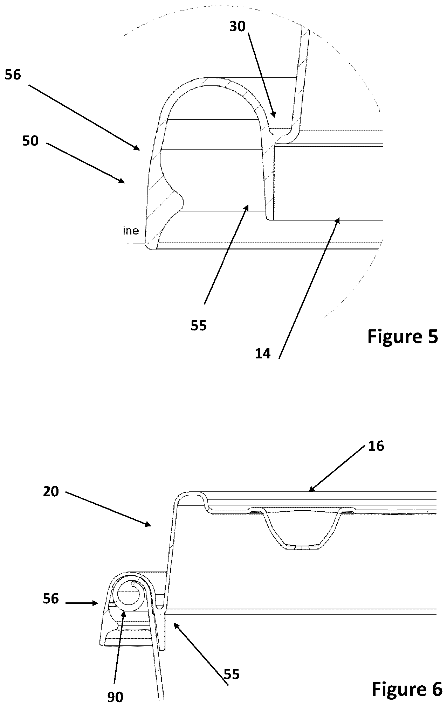

Embodiments of the invention are described below with reference to **Figures 1 to 8****:**
Figure 1 shows various views of the lid
Figure 2 shows the inner face of a lid from the bottom and the top face of that lid from the top that is engraved
Figure 3 shows a cross-section of a lid that has a circular shape
Figure 4 shows a detail of the lid i.e., the opening for the mouth of the user and a flap to seal it
Figure 5 shows the cross section of the periphery pf the lid
Figure 6 shows the lid on a cup
Figure 7 illustrates how the lid are placed, one on the top of the other
Figure 8 shows a lid before closing a cup
Figure 9 shows the lid of Figure 8 on a cup
Figure 10 shows a cross-section of two lids that are stacked

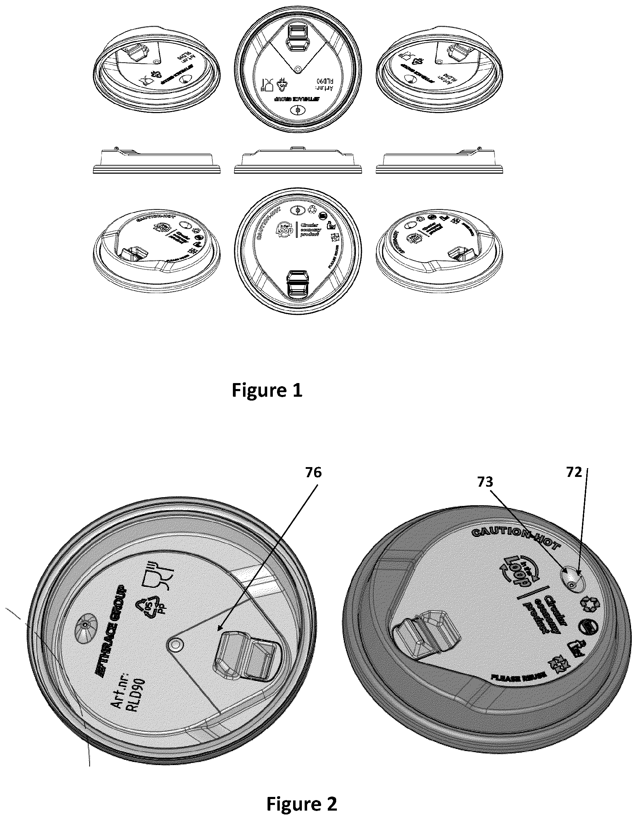

**Figure 1** shows a lid including a central body (10) with a periphery (14) and a peripheral body (50).

The central body (10) has an opening that is used as an outlet for the beverage. The opening may come directly in contact with the user's mouth or via a straw, in particular when the cup contains beverage that is cold or at ambient temperature. A small opening (72) is also provided on the central lid for ventilation. That opening is located in a cavity (73) that collects unintended spillage.

A connector (30) is between the central body (10) and the peripheral body (50). The connector (30) may be diminished in a border surface between the central body (10) and the peripheral body (50). The connector (30) keeps the central body (10) at a radial distance from the peripheral body (50).

The peripheral body (50) is ring-shaped and extends along the whole periphery (14) of the central body (10). In some examples not shown in the Figures, it may extend along a substantial part of the periphery (14) of the central body (10).

The cross-section of the peripheral body (50) is U-shaped with a cavity between two opposite legs (55, 56). The cavity is adapted to receive a rim (90) of the cup, which cooperates with the lid, between the two opposite legs (55, 56). Each one of the two opposite legs (55, 56), i.e. the inner leg (55) and the outer leg (56) has a respective free edge. The inner leg (55) is nearer to the central body (50) than the outer leg (56). The rim (90) of the cup enters the cavity through the opening of the cavity that is provided between the two legs (55, 56). The opening of the cavity is at an axial distance from the central body (10). The displacement of the peripheral body (50) from the central body (10) facilitates the user to approach the lid and to drink.

At the edge or adjacent to the edge of the outer leg (56) there is α bulge (60) facing the inner leg (55). The bulge (56) secures the rim (90) of the cup in the cavity. The outer leg (56) has elasticity to allow a snap function of the lid on the cup.

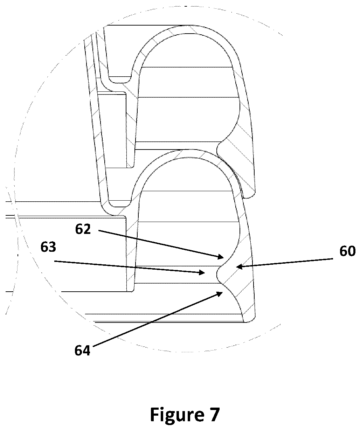

The bulge (60) is provided on the face of the outer leg (56) that faces the inner leg (55). The bulge (60) has a contour with two concave parts (62, 64) and a convex part (63) in between the two concave parts (62, 64). The configuration facilitates the snapping and removal of the lid from the cup. Other shapes of contours are anticipated. In some examples the concave contour (64) that is closer to the edge of the outer leg (56) is longer than the contour of the concave part (62) that is more distant from that edge. The contour of the bulge (60) matches the contour of the face of the outer leg (56) to facilitate stacking of the lids, as illustrated in **Figure 7****.** As seen in the example of Figure 7, both free ends of the opposite legs (55, 56) are at an axial distance from the central body (10).

The central body (10) has an upper wall (16) that is configured to cover the opening of the cup and a side wall (20) extending at an angle from the upper wall (16). In some examples the connector (30) extends from an end of the side wall (20), which is at a distance from the upper wall (16) radially outwardly and is joined to the peripheral body (50) at a distance from the edge of the inner leg (55). In these examples, the connector (30) is like a flange. In other examples, the connector (30) may be diminished in a border surface between the central body (10) and the peripheral body (50). The inner leg (55) and the outer leg (56) extend in the axial direction of the lid i.e., normal to the upper wall (16), along their whole length around the lid .

When the connector (30) is like a flange it may lie parallel or almost parallel to the upper wall (16) of the central body (10). In some examples the connector (30), the side wall (20) and the inner leg (55) form a channel to arrest drops of liquid.

The opening of the cavity of the peripheral body (50) is at a radial distance from the central body (10). In some examples the opening of the cavity is also at an axial distance from the central body (10).

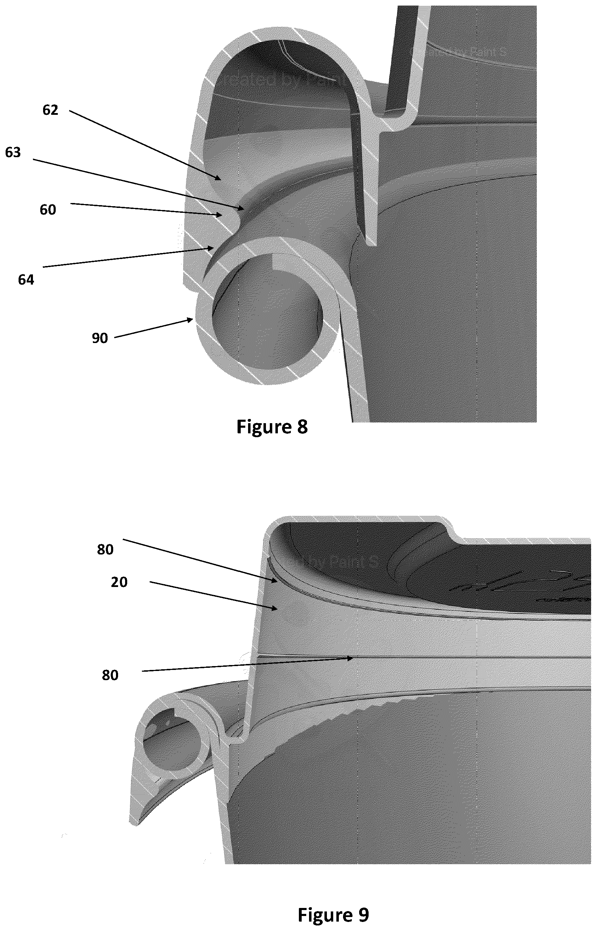

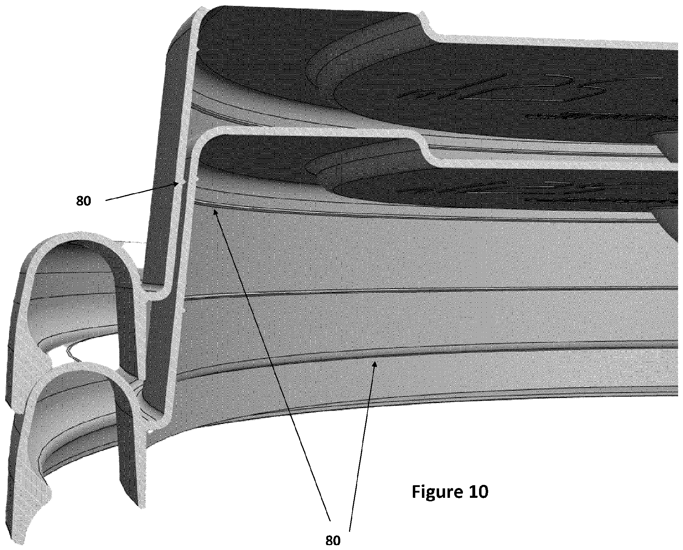

In order to strengthen the lid, there are webs (80) on the side wall (20) and/or inner leg (55) and/or outer leg (56). In some examples the webs (80) are circumferential. They may extend along the whole circumference of the side wall (20), the inner leg (55) and the outer leg (56) or along part of it. The height of the webs is in some examples in the order of tenth of a mm. Webs may have other orientation, for example axial or radial, for example when they are on the central wall (16). **Figures 8 and 9** show webs (80) on the side wall (20) and adjacent to the free edge of the outer leg (56). The webs on the side wall facilitate the stacking of the lids, which is illustrated in **Figure 7** **and** **Figure 10****,** and maintain a space between the lids. This configuration allows an easy removal of a lid from the stack.

The weight of the re-usable lid is higher than lids that are used once.

Any information that is on the lid is engraved and it is not printed with ink. In some examples, the lids do not have any label attached to it, for example labels attached to the lid by In-Mold-Labeling process. Labels may be attached to lids according to the invention, if they are appropriate for repeated use and washing.

The raw material used for the production of the lid is plastic, for example polypropylene (PP) exhibiting an MFI range 40-100 for example 80. The choice of the raw material as well as any additional additives introduced during the production of the lid, is chosen in order to fulfill the requirements set for repeated contact with food as described in *COMMISSION REGULATION (EU) No 10*/*2011 of 14 January 2011 on plastic materials and articles intended to come into contact with food* and it's amendments, for example EU Regulation 1645/2020.

Production of the lid may be performed with the injection molding production technology including all different variations of the method, for example Injection Compression Molding.

In some examples the method of production is hot runner injection molding. Hot runner molds use a heated system to keep the plastic material in a molten state, while cold runner molds use a cooled system to solidify the plastic material in the runner. Hot runner molds are suitable for large volume production and high precision parts and produce parts with high quality and low waste.

For an effective molding and a flawless lid the lid is thicker near the outlet of the of the molding machine - the outlet is the opening from where the molding material flow to produce the lid, so that the flow is unhindered to all volume of the lid without the development of stresses and deformations. In some examples the thickness is increased in the areas where there is an opening, to provide adequate strength. Only as an indicative example, the thickness may be increased by approximately 10% i.e., if the thickness of the lid is about 0.3 mm the area of the lid with increased thickness is about 0.33 mm. In the example of **Figure 2** the area of the increased thickness is triangular and designated with the reference numeral (76).

Some advantages of the lids are:
- Snapping with the rim of the cup is effectively achieved with the design of the bulge and the production technology involving injection molding
- Snapping action may be achieved with various shapes of rims of cups, either reusable - for example cups made of plastic-, or single use cups -for example from plastic- or paper-based material.
- Design that allows optimal stacking when packaging the product in bundles without the risk of not being separated into individual pieces
- The lids have relatively low weight without compromising the required mechanical properties and durability for repeated use
- The design of the lids allows optimal stacking when packaging the product in bundles eliminating the risk of falling apart. Stacking the lids one on the other, minimizes storage area requirements at the point of sale, use of plastic and the carbon footprint of the product. It also allows the user to pick-up only the lid that is standing on the top of the stacked column
- The lids may be produced using the latest generation molding technology with hot runner circuit for transferring the material into the injection cavities
- The lids may be produced by fully recyclable materials
- The lids are decorated by engraving and there is no need for printing and/or integration of labels, eliminating the risk of contamination and facilitating handwashing of washing in a dishwasher.

## Claims

1. Reusable lid for liquid cups with a rim (90), with a central body (10) with a perimeter (14) and a peripheral body (50), whereby
• the central body (10) is connected to the peripheral body (14) along the perimeter (14) of the central body (10),
• the peripheral body (50) has a cross-section of a U-form with an outer face having a contour, and two opposite legs, namely an inner leg (55) and an outer leg (56), and a cavity configured to house the rim (90) of the cup,
• the cavity has an opening,
• the outer leg (56) has a free edge, an inner face within the cavity and a bulge (60) on the inner face, adjacent to the free edge of the outer leg (56)
• the peripheral body (50) has an outer face with a contour and the bulge (60) has a contour that corresponds to the contour of the outer face of the peripheral body (50), to facilitate stowage.

2. Reusable lid according to claim 1, whereby the bulge (60) has a contour with two concave curves (62, 64), i.e. the first concave curve (64) and the second concave curve (62) with the first concave curve (64) being closer to free edge than the second concave curve (62), and a convex curve (63) between the first concave curve (64) and the second concave curve (62).

3. Reusable lid according to claim 2, whereby the peripheral body (50) has a contour and the first concave curve (64) has a shape corresponding to a part of the contour of the outer face of the peripheral body (50), to facilitate stowage.

4. Reusable lid according to any one of claims 1 to 3, whereby the central body (10) has a central wall (16) configured to cover the opening of the cup and a side wall (20) at an angle, optionally at right angle or at about right angle with respect to the central wall (16)

5. Reusable lid according to claim 4, whereby the central wall (16) has an outlet to allow the flow of the liquid that is in the cup.

6. Reusable lid according to claim 5, with a flap movable between a position to open the outlet and a position to close the outlet, so as to hinder the flow of fluid from the outlet.

7. Reusable lid according to any one of claims 1 to 6, whereby the opening of the cavity is axially displaced from the central body (10).

8. Reusable lid according to any one of claims 1 to 7, whereby the peripheral body (50) is radially displaced from the central body (10), with a connector (30) therebetween.

9. Reusable lid according to any one of claims 1 to 8, whereby the inner leg (55) has a free end.

10. Reusable lid according to any one of claims 1 to 9, whereby at least one of the inner leg (54), the outer leg (55) and the side wall (56) is strengthened with webs (80).

11. Reusable lid according to any one of claims 1 to 10, whereby the side wall (56) is strengthened with webs (80), optionally extending along the periphery of the side wall (56).

12. Reusable lid according to claim 10 or claim 11, whereby the webs (80) are ring-shaped.

13. Reusable lid according to anyone of claims 1 to 12, whereby the lid has not any label attached to it and optionally the lead is one single molded piece and any information that appears on its surface is engraved.

14. Reusable lid according to anyone of claims 1 to 13, whereby the thickness of the lid is less than 0.38 mm.

15. Method of production of a lid according to anyone of claims 1 to 14, whereby the lid is produced by injection molding, preferably by hot-runner injection molding.
